# FASCICULE DE BREVET EUROPEEN

(11) **EP 3 090 199 B1**
(45) Date de publication et mention de la délivrance du brevet: **21.02.2018**
(21) Numéro de dépôt: 14835517.5
(22) Date de dépôt: 23.12.2014
(51) Int. Cl.: F17C 11/00

(54) **SYSTEME DE STOCKAGE REVERSIBLE D'H2 AVEC RESERVOIR CONTENANT DES HYDRURES METALLIQUES, A EQUILIBRAGE DE PRESSION**
UMKEHRBARES H2-SPEICHERSYSTEM MIT EINEM TANK MIT METALLHYDRIDEN UND MIT DRUCKAUSGLEICH
REVERSIBLE H2 STORAGE SYSTEM WITH A TANK CONTAINING METAL HYDRIDES, WITH PRESSURE BALANCING

(30) Priorité: 02.01.2014 FR 1450008
(43) Date de publication de la demande: 09.11.2016
(73) Titulaire: Commissariat à l'Énergie Atomique et aux Énergies Alternatives, 75015 Paris (FR)
(72) Inventeur: CHAISE, Albin, F-38000 Grenoble (FR); GILLIA, Olivier, F-38360 Sassenage (FR)
(74) Mandataire: Nony
(86) Numéro de dépôt international: PCT/IB2014/067272
(87) Numéro de publication internationale: WO 2015/101905

(56) Documents cités:
- WO-A1-2009/063282
- WO-A1-2010/091178
- WO-A1-2011/058044
- US-A1- 2002 073 618
- US-A1- 2007 000 562

## Description

### Domaine technique

La présente invention concerne un système de stockage réversible d'hydrogène H2 sous forme solide, comprenant un réservoir dont l'enceinte contient un échangeur de chaleur qui contient des hydrures métalliques.

La présente invention vise à simplifier la conception et la réalisation de l'échangeur de chaleur intégré.

Les applications possibles de l'invention sont nombreuses et peuvent concerner l'ensemble du champ d'applications du stockage de l'hydrogène.

Il peut s'agir de systèmes de stockage d'H2 avec réservoirs dédiés aux moyens de transport, tels que bateaux, sous-marins, voitures, autobus, camions, engins de chantier, véhicules à deux roues, ainsi que ceux du domaine des alimentations transportables en énergie, telles que les batteries pour appareils électroniques portables (téléphone portable, ordinateur portables,...).

Il peut s'agir également de systèmes de stockage d'H2 en plus grosse quantité et stationnaires tels que groupes électrogènes, stockage de l'H2 produit par des énergies intermittentes (éoliennes, panneaux photovoltaïques, géothermie,...).

De manière générale, le système selon l'invention peut être utilisé à des fins uniquement de transport de l'hydrogène, mais également pour un stockage embarqué d'hydrogène pour pile à combustible ou moteur thermique ou encore un stockage stationnaire d'hydrogène.

### Etat de la technique

On cherche des énergies alternatives aux pétroles du fait, notamment, de la réduction des réserves de pétrole. Un des vecteurs prometteurs pour ces sources d'énergie est l'hydrogène, qui peut être utilisé dans les piles à combustible pour produire de l'électricité.

L'hydrogène est un élément très répandu dans l'univers et sur la Terre, il peut être produit à partir du charbon, du gaz naturel ou d'autres hydrocarbures, mais aussi par simple électrolyse de l'eau en utilisant par exemple l'électricité produite par l'énergie solaire ou éolienne.

Les piles à combustibles fonctionnant avec de l'hydrogène sont déjà utilisées dans certaines applications, par exemple dans des véhicules automobiles mais sont encore peu répandues, notamment du fait des précautions à prendre et des difficultés pour le stockage de l'hydrogène.

Afin de diminuer le volume de stockage, l'hydrogène peut être stocké sous forme d'hydrogène gazeux comprimé entre 350 et 700 bars, mais cette densification de l'énergie peut encore être améliorée en intégrant des hydrures dans l'enceinte de pression.

Pour être plus dense encore, l'hydrogène peut aussi être stocké sous forme liquide, cependant ce stockage n'assure qu'un faible rendement de stockage et ne permet pas le stockage sur de longue durée. Le passage d'un volume d'hydrogène de l'état liquide à l'état gazeux dans les conditions normales de pression et de température produit un accroissement de son volume d'un facteur d'environ 800. Les réservoirs d'hydrogène sous forme liquide ne sont en général pas très résistants aux chocs mécaniques, cela pose d'importants problèmes de sécurité.

Il existe également le stockage d'hydrogène sous forme solide au moyen d'hydrures. Ce stockage autorise une densité volumique de stockage importante tout en minimisant l'impact énergétique du stockage sur le rendement global de la chaîne hydrogène, i.e. de sa production à sa conversion en une autre énergie.

Le principe du stockage solide de l'hydrogène sous forme d'hydrures est le suivant: certains matériaux et en particulier certains métaux possèdent la capacité d'absorber l'hydrogène pour former un hydrure, cette réaction est appelée absorption. Les hydrures formés peuvent à nouveau donner de l'hydrogène gazeux et un métal. Cette réaction est appelée désorption. L'absorption ou la désorption interviennent en fonction de la pression partielle d'hydrogène et la température.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur, alors que la libération de l'hydrogène est une réaction endothermique, i.e. qui absorbe de la chaleur.

On cherche notamment à avoir un chargement rapide de la poudre métallique en hydrogène. Pour obtenir un tel chargement rapide, il faut évacuer la chaleur produite lors de ce chargement pour éviter de freiner l'absorption de l'hydrogène sur la poudre ou la matrice métallique. Lors du déchargement en hydrogène, de la chaleur est apportée. Par conséquent, l'efficacité du refroidissement et du réchauffement conditionne les débits de chargement et de déchargement.

Le document WO2011/058044 décrit un système de stockage réversible d'hydrogène comprenant un réservoir de stockage d'hydrogène comprenant une enceinte contenant des hydrures métalliques dans un échangeur de chaleur à deux circuits de fluide, un circuit de circulation d'hydrogène relié à l'intérieur de l'enceinte, pour alimenter ou récupérer l'hydrogène respectivement à absorber ou désorber par les hydrures métalliques, la partie du premier circuit à l'intérieur de l'enceinte constituant un des circuits d'échangeur, un circuit de circulation d'un fluide caloporteur relié à l'échangeur.

Autrement dit, il est nécessaire d'évacuer de la chaleur lors de l'absorption et d'apporter de la chaleur lors de la désorption afin de faciliter les réactions et augmenter l'efficacité de l'hydrure en termes de débit d'hydrogène entrant ou sortant du réservoir de stockage. Ainsi, un réservoir d'hydrogène sous forme d'hydrures métalliques comprend généralement une enceinte contenant les hydrures et intègre en son sein un échangeur de chaleur.

La conception et le dimensionnement de cet échangeur intégré doit répondre à plusieurs critères principaux que l'on peut énoncer comme suit :
- il doit produire un échange de chaleur efficace. En effet, dans le réservoir, l'hydrure se présente sous forme de poudre avec une conductivité thermique limitée. Le dimensionnement du réservoir doit donc prendre en compte les débits d'hydrogène à assurer ;
- l'absorption de l'hydrogène par le métal entraîne une augmentation de volume de celui-ci. Cela a deux conséquences. D'une part, du fait de son comportement fragile, le matériau métallique se pulvérise et se transforme en fine poudre. Ce phénomène est appelé décrépitation. D'autre part, du fait du gonflement, le matériau applique une pression mécanique sur les parois de son contenant. Pour limiter ces contraintes, on peut compartimenter l'hydrure dans des cellules de dimensions adaptées, et en particulier, éviter de faire des cellules élancées verticalement, la verticale étant définie par la gravité.
- la pression d'hydrogène dans le réservoir varie, avec notamment des montées en pression de l'hydrogène. Le réservoir doit donc pouvoir résister à de telles variations.

Un autre problème se pose lorsque la différence de pression entre celle du gaz hydrogène dans le réservoir et celle du fluide caloporteur au sein de l'échangeur intégré est très différente. Généralement, le fluide caloporteur est à une pression de quelques bars, alors que l'hydrogène peut être à bien plus haute pression, 350 bars par exemple.

La haute pression d'hydrogène s'applique alors à l'extérieur des canaux du circuit de fluide caloporteur, ce qui est extrêmement sollicitant mécaniquement pour ces canaux au sein de l'échangeur intégré.

La solution existante exige des épaisseurs de matériau de canaux qui sont très importantes. Par exemple, un tube cylindrique soumis à une forte pression extérieure est dimensionné au flambage, les épaisseurs de ses parois sont alors très importantes, ce qui d'une part, alourdit et rend plus cher le réservoir de stockage de l'hydrogène, et d'autre part, est néfaste à un bon transfert thermique de la chaleur entre l'hydrure et le fluide caloporteur, car la résistance thermique augmente avec l'épaisseur de parois de canaux de circulation du caloporteur.

Il existe donc un besoin d'améliorer encore les systèmes de stockage réversible de l'hydrogène avec réservoir contenant des hydrures métalliques et intégrant en son sein un échangeur de chaleur, notamment en vue d'améliorer le transfert thermique entre l'(les) hydrure(s) métallique(s) et l'hydrogène, de diminuer la masse et le coût de réalisation du réservoir.

Le but de l'invention est de répondre au moins partiellement à ce besoin.

### Exposé de l'invention

Pour ce faire, l'invention a pour objet un système de stockage réversible d'hydrogène comprenant :
- un réservoir de stockage d'hydrogène comprenant une enceinte contenant des hydrures métalliques intégrés dans un échangeur de chaleur à deux circuits de fluide, dit échangeur primaire,
- un circuit de circulation d'hydrogène, dit premier circuit, relié à l'intérieur de l'enceinte, pour alimenter ou récupérer l'hydrogène H₂ respectivement à absorber ou désorbé par les hydrures métalliques, la partie du premier circuit à l'intérieur de l'enceinte constituant un des circuits d'échangeur,
- un circuit de circulation d'un fluide caloporteur, dit deuxième circuit, relié à l'échangeur, la partie du deuxième circuit dans l'échangeur constituant l'autre des circuits de l'échangeur, les premier et deuxième circuits étant étanches l'un par rapport à l'autre,
- un moyen de pressurisation pour amener la valeur de la pression dans le deuxième circuit à une valeur sensiblement égale de celle dans le premier circuit avec une différence typiquement d'un bar voire 2 à 3 bars.

Par « échangeur de chaleur », on entend ici et dans le cadre de l'invention, un dispositif comprenant au moins un tube à section quelconque dans lequel circule un fluide caloporteur et agencé au moins partiellement dans un lit de poudre hydrure métallique dans l'enceinte. Des éléments conducteurs de la chaleur, tels que des ailettes, des fils, une mousse métallique... peuvent être reliés à un tube d'échangeur de chaleur selon l'invention.

Par « valeur proche », on entend ici et dans le cadre de l'invention, une valeur de pression sensiblement égale dans le premier et deuxième circuits, avec une différence typiquement d'un bar voire 2 à 3 bars, voire de l'ordre d'une dizaine de bars.

On précise que le premier circuit assure un contact direct de l'hydrogène avec le matériau hydrure.

Ainsi, l'invention consiste essentiellement à réduire à de faibles valeurs la différence de pression entre les deux fluides, l'hydrogène et le caloporteur, au sein du réservoir.

Dans le cadre de l'invention, la pression d'hydrogène est celle dimensionnante notamment car elle peut être comprimée à de fortes pressions, typiquement à 350 bars voire au-delà, typiquement jusqu'à 1000 bars pour être stockée dans des réservoirs stationnaires. De ce fait, l'invention consiste à pressuriser le fluide caloporteur afin qu'il atteigne au moins la pression d'hydrogène.

Le fait de réduire cette différence de pression permet d'envisager d'alléger les structures des échangeurs de chaleur intégrés dans les réservoirs d'hydrogène, en mettant en oeuvre des tubes aux parois plus fines. Le fait d'avoir des parois plus fines comporte deux avantages majeurs, à savoir d'une part la réduction du poids et d'autre part la réduction de la résistance thermique, car tout le flux de chaleur passe à travers cette paroi de tube. Cela comporte un avantage indéniable pour les réservoirs embarqués, et en général, cela apporte un gain en termes d'efficacité et de coût.

Un autre avantage est de pouvoir adopter des formes de tubes pour l'échangeur de chaleur qui ne sont pas circulaires. On peut ainsi envisager de manière avantageuse, des tubes à section carrée, rectangulaire, triangulaire, oblongue, en croix, voire à section en étoile à quatre branches ou multi-branches. Ces dernières formes à section en étoile ont notamment pour avantages d'augmenter la surface d'échange et de faciliter leur intégration dans l'échangeur de chaleur.

Le fluide caloporteur peut être à une pression proche de celle de l'hydrogène.

Avantageusement, pour un tube de section circulaire, la pression du fluide caloporteur est légèrement supérieure à celle de l'hydrogène. Ainsi, les canaux (tubes) d'un échangeur intégré au sein du réservoir sont dans un mode de sollicitation mécanique en pression interne, c'est-à-dire de l'intérieur des canaux vers l'extérieur au sein de l'enceinte de réservoir, et non pas en pression externe qui pose des problèmes de flambage. La sollicitation en pression interne est plus facilement maîtrisable.

Ainsi, préférentiellement on préfère que le fluide caloporteur soit à une pression plus élevée que le gaz H₂.

Autrement dit, le dimensionnement de l'échangeur de chaleur est plus aisé.

Autrement dit encore, grâce à l'invention, on obtient une simplification de la conception et de la réalisation de l'échangeur intégré au sein du réservoir d'hydrogène, qui peut être plus compact, plus léger et plus performant qu'un échangeur selon l'état de l'art.

De préférence, le fluide caloporteur est un liquide, de préférence à base d'eau, notamment avec du glycol ou autre.

Selon un mode de réalisation avantageux, le moyen de pressurisation peut consister en le(s) tube(s) de l'échangeur de chaleur, la section du (des) tube(s) de l'échangeur étant adapté pour se déformer suffisamment pour amener la valeur de la pression dans le deuxième circuit à une valeur proche de celle dans le premier circuit. Autrement dit, on peut envisager selon ce mode que l'équilibrage de pression soit assuré par la déformation de la section du tube de l'échangeur elle-même, assurant le rôle d'une membrane souple. Par exemple, un tube à section en étoile a une capacité à se déformer aisément, et ainsi à transmettre la pression du premier circuit au deuxième circuit.

Alternativement ou cumulativement, selon un autre mode de réalisation avantageux, le moyen de pressurisation consistant en un équilibreur de pression constitué d'une enceinte à l'intérieur de laquelle est fixée un élément mobile séparant de manière étanche une première chambre d'une deuxième chambre, la première chambre étant reliée au premier circuit, la deuxième chambre étant reliée au deuxième circuit.

L'élément mobile peut être une membrane souple ou un piston. Au lieu d'un accumulateur à membrane ou piston, on peut également envisager un compresseur pour mettre en pression le circuit du fluide caloporteur. Dans ce cas, on prévoit en plus un circuit d'asservissement de sorte que la pression fournie par le compresseur suive celle de l'hydrogène.

Selon une première variante, le moyen de pressurisation est agencé à l'extérieur du réservoir de stockage d'H₂.

Selon une deuxième variante, le moyen de pressurisation est agencé à l'intérieur de l'enceinte du réservoir de stockage d'H₂.

Selon un mode de réalisation avantageux, le deuxième circuit comporte une première pompe et un autre échangeur de chaleur constituant un premier échangeur secondaire.

Selon ce mode, le fluide secondaire de l'échangeur secondaire est avantageusement un liquide, de préférence de l'eau, ou un gaz, de préférence de l'air.

L'invention concerne également sous un autre de ses aspects, un procédé de fonctionnement d'un système décrit précédemment, comprenant une étape de pressurisation permanente, pour amener la valeur de pression dans le deuxième circuit à une valeur proche de celle du premier circuit..

L'étape de pressurisation est de préférence réalisée automatiquement.

Avantageusement, la pression dans le deuxième circuit est supérieure à celle dans le premier circuit.

De préférence, la pression dans le premier circuit est au moins égale à 350 bars, celle dans le deuxième circuit étant supérieure d'environ 2 à 3 bars.

L'invention concerne également un ensemble d'alimentation électrique comprenant une pile à combustible et un système décrit précédemment, le premier échangeur de chaleur secondaire étant relié à la pile à combustible de sorte que la chaleur évacuée par la pile à combustible en fonctionnement permette la désorption de l'hydrogène dans le réservoir.

L'invention concerne enfin une installation stationnaire de rechargement d'hydrogène d'un ensemble selon la revendication 14, comprenant une deuxième pompe et un deuxième échangeur de chaleur secondaire, la deuxième pompe et le deuxième échangeur de chaleur secondaire étant destinés à être reliés au deuxième circuit lors du rechargement en H2 du réservoir.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique d'un exemple de système de stockage réversible de l'hydrogène selon l'invention;
- la figure 2 est une vue schématique d'un ensemble pour une application embarquée, telle que sur un véhicule automobile, comprenant une pile à combustible et un système de stockage réversible de l'hydrogène selon l'invention, la connexion de l'ensemble en application stationnaire étant également représentée;
- les figures 3A et 3B sont des vues schématiques de variantes d'agencement du moyen de pressurisation d'un système de stockage réversible de l'hydrogène selon l'invention ;
- les figures 4A à 4H illustrent en vue de coupe transversale différentes variantes de forme de tubes d'échangeurs de chaleur pouvant être utilisés dans un système de stockage réversible de l'hydrogène selon l'invention.

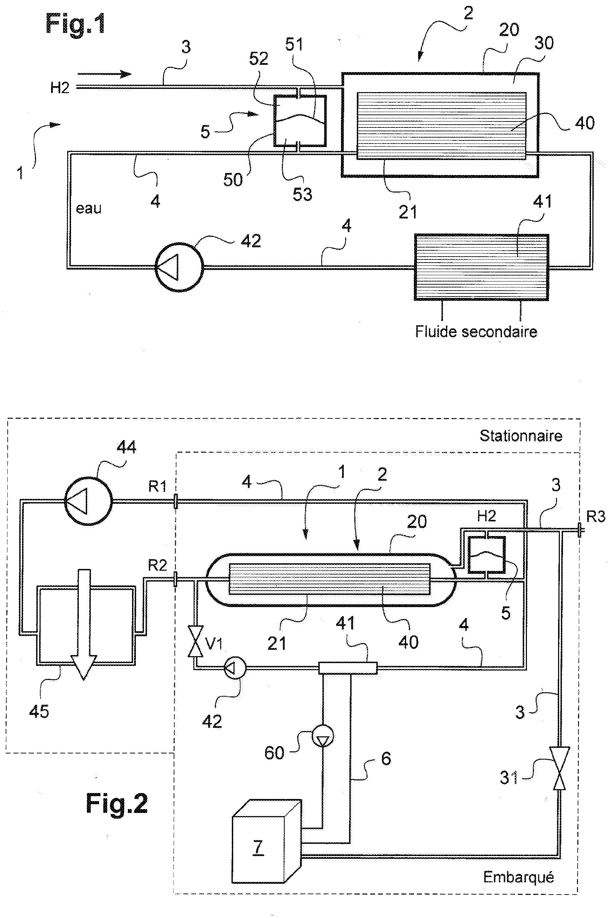

On a représenté en figure 1 un système 1 de stockage réversible d'hydrogène H₂ selon l'invention.

Le système 1 comprend tout d'abord un réservoir de stockage 2 comprenant une enceinte 20 contenant des hydrures métalliques, non représentés et intégrant en son sein un échangeur de chaleur 21 constituant un échangeur primaire.

Un circuit de circulation d'hydrogène 3 est relié à l'intérieur de l'enceinte 20, pour alimenter ou récupérer l'hydrogène H₂ respectivement à absorber ou désorbé par les hydrures métalliques. La partie 30 du circuit 3 à l'intérieur de l'enceinte 20 constitue un des circuits de l'échangeur primaire 21. Le circuit 3 assure un contact direct de l'hydrogène avec le matériau hydrure,

Un circuit de circulation d'un liquide caloporteur 4 est relié à l'échangeur 21, la partie 40 de ce circuit 4 dans l'échangeur constituant l'autre des circuits de l'échangeur 21. Ce circuit 4 a donc pour fonction d'être une boucle de refroidissement dite primaire qui pénètre à l'intérieur de l'enceinte 20 et en ressort. Pour assurer l'échange thermique avec un fluide secondaire, de préférence un liquide, il est prévu au sein de cette boucle 4, un échangeur de chaleur secondaire 41. La circulation du liquide au sein de la boucle 4 est assurée par une pompe 42.

Selon l'invention, la boucle 4 est pressurisée à une pression proche de la pression d'alimentation en hydrogène, i.e. celle régnant dans le circuit 3 et dans l'enceinte 20 du réservoir 2 par l'intermédiaire d'un moyen d'équilibrage de pression 5 agencé à l'extérieur du réservoir 2.

Comme illustré en figures 1 et 2, le moyen d'équilibrage de pression 5 est constitué par un accumulateur de type à membrane souple ou à piston. Ainsi, il est constitué d'une enceinte 50 à l'intérieur de laquelle est fixée une membrane souple 51 séparant de manière étanche deux chambres 52, 53. La première chambre 52 est reliée au circuit d'alimentation/récupération en hydrogène 3. La deuxième chambre 53 est quant à elle reliée à la boucle de refroidissement 4.

A titre d'exemple avantageux, le système 1 montré en figure 1 permet de stocker de l'hydrogène dans le réservoir 2 sous une pression de 350 bars d'hydrogène. La montée de pression d'hydrogène maximale peut être de 350 bars en un temps de 1 à 1,5min. Le réservoir 2 peut avoir une capacité de stockage de l'ordre de 1,5 kg d'H₂.

Avec l'accumulateur à membrane 5, l'eau circulant dans la boucle 4 peut être à une pression supérieure de l'ordre de 2 à 3 bars en plus.

On peut obtenir un refroidissement approprié avec un débit d'eau lors du chargement d'H₂, de l'ordre de 1 litres /seconde, la température de l'eau variant entre 10 et 75°C.

Avec l'accumulateur à membrane 5 selon l'invention, la différence de pression entre le circuit caloporteur 4 et l'hydrogène dans l'échangeur de chaleur 21 intégré au réservoir 2 est ainsi réduite.

Il faut veiller cependant à ce que l'échangeur de chaleur secondaire 41 puisse gérer une différence de pression plus importante, car il échange avec un circuit faiblement pressurisé, un circuit d'eau ou d'air par exemple. Or cette différence de pression plus importante à prévoir sur l'échangeur secondaire 41 ne présente pas d'inconvénient car :
- d'une part, il ne contient aucun hydrure, et donc sa conception est simplifiée, et les différences de pression mêmes importantes peuvent être aisément atteintes par un dimensionnement usuel d'échangeurs de chaleur conventionnel,
- d'autre part, lorsque le système selon l'invention est prévu pour être de type embarqué, par exemple dans un véhicule automobile, en vue de faire fonctionner une pile à combustible, on peut se permettre de ne pas embarquer cet échangeur secondaire 41. Il peut être installé en fixe, faisant partie intégrante d'une station de remplissage en hydrogène. En ce qui concerne le déchargement en hydrogène, un échangeur secondaire 41 est néanmoins nécessaire. Cela étant, pour une utilisation de l'hydrogène dans une pile à combustible pour faire fonctionner un véhicule par exemple, il n'y a pas besoin de forts débits d'hydrogène, les flux de chaleur échangés sont ainsi bien moindres, d'un facteur 50 à 100 environ. L'échangeur secondaire 41 à embarquer peut être donc de bien plus petite taille, que celui pour la phase de chargement en hydrogène. Un système 1 selon l'invention qui est embarqué est donc globalement plus léger.

On a représenté en figure 2, un système 1 selon l'invention pour une application embarquée avec pile à combustible 7 avec le chargement de l'hydrogène en stationnaire.

En stationnaire, la gestion des forts flux de chaleur, i.e. des forts débits, se fait par un échangeur de chaleur extérieur 45, dont la technologie peut être usuelle telle qu'un échangeur eau/air par exemple. Le débit d'eau dans le circuit 4 est assuré par une pompe 44 dans la station de chargement.

Ainsi, en mode de chargement de l'hydrogène dans la station, la vanne V1 est fermée, la pompe 42 est à l'arrêt), la pompe 44 est en fonctionnement, les raccords de connexion R1, R2, et R3 sont connectés, le raccord R3 permettant l'amenée de l'hydrogène dans le réservoir 2.

En mode de déchargement, i.e. de fonctionnement de la pile à combustible 7 embarquée, la vanne V1 est ouverte, la pompe 42 est en fonctionnement, les raccords R1, R2, et R3 sont déconnectés et fermés de manière étanche. La pile à combustible 7 est en marche, la pompe 60 du circuit secondaire 6 est aussi en fonctionnement. Avec un tel système, la chaleur perdue par la pile à combustible 7 sert à faire désorber l'hydrogène du matériau hydrure dans le réservoir 2, par l'intermédiaire du circuit secondaire 6.

D'autres variantes et améliorations peuvent être prévues sans pour autant sortir du cadre de l'invention.

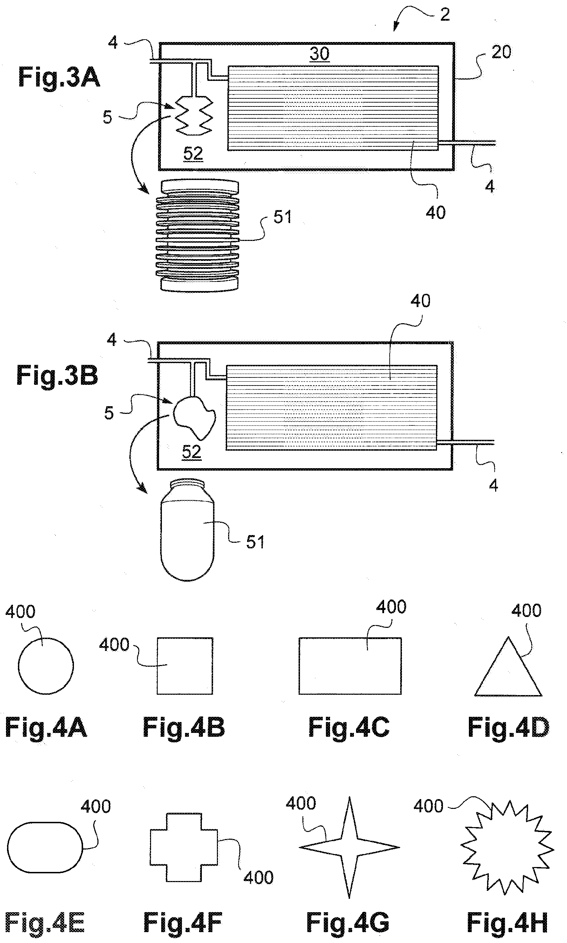

Ainsi, si dans les systèmes 1 représentés en figure 1 et 2, le moyen de pressurisation 5 est agencé à l'extérieur de l'enceinte 20 du réservoir 2 de stockage, on peut tout aussi bien envisager que le moyen de pressurisation 5 soit agencé à l'intérieur de l'enceinte 20, comme illustré aux figures 3A et 3B. En figure 3A, le moyen de pressurisation 5 est constitué d'un accumulateur de pression sous la forme d'un piston mobile 51 dans la partie 30 du circuit de circulation d'hydrogène au sein de l'enceinte 2, tandis qu'en figure 3B, l'accumulateur 5 est un accumulateur à membrane souple 51 dans la partie 30.

Les tubes 400 d'échangeur 40 au sein de l'enceinte 2 peuvent présenter différentes formes telles qu'à section circulaire (figure 4A), carrée (figure 4B), rectangulaire (figure 4C), triangulaire (figure 4D), oblongue (figure 4E), en croix (figure 4F), voire à section en étoile à quatre branches (figure 4G) ou multi-branches (figure 4H). Ces dernières formes à section en étoile ont notamment pour avantages d'augmenter la surface d'échange et de faciliter leur intégration dans l'échangeur de chaleur.

L'invention n'est pas limitée aux exemples qui viennent d'être décrits ; on peut notamment combiner entre elles des caractéristiques des exemples illustrés au sein de variantes non illustrées.

## Revendications

1. Système de stockage réversible d'hydrogène (1) comprenant :
- un réservoir de stockage d'hydrogène (2) comprenant une enceinte (20) contenant des hydrures métalliques intégrés dans un échangeur de chaleur (21) à deux circuits de fluide, dit échangeur primaire,
- un circuit de circulation d'hydrogène (3), dit premier circuit, relié à l'intérieur de l'enceinte, pour alimenter ou récupérer l'hydrogène H₂ respectivement à absorber ou désorber par les hydrures métalliques, la partie (30) du premier circuit à l'intérieur de l'enceinte constituant un des circuits d'échangeur,
- un circuit de circulation d'un fluide caloporteur (4), dit deuxième circuit, relié à l'échangeur, la partie (40) du deuxième circuit dans l'échangeur constituant l'autre des circuits de l'échangeur, les premier et deuxième circuits étant étanches l'un par rapport à l'autre,
- un moyen de pressurisation (5) pour amener la valeur de la pression dans le deuxième circuit à une valeur sensiblement égale de celle dans le premier circuit avec une différence typiquement d'un bar voire 2 à 3 bars

2. Système selon la revendication 1, le moyen de pressurisation consistant en le(s) tube(s) (400) de l'échangeur de chaleur (21), la section du (des) tube(s) de l'échangeur étant adapté pour se déformer suffisamment pour amener la valeur de la pression dans le deuxième circuit à une valeur proche de celle dans le premier circuit.

3. Système selon la revendication 1, le moyen de pressurisation consistant en un équilibreur de pression constitué d'une enceinte (50) à l'intérieur de laquelle est fixée un élément mobile (51) séparant de manière étanche une première (52) chambre d'une deuxième (53) chambre, la première chambre (52) étant reliée au premier circuit (3), la deuxième chambre (53) étant reliée au deuxième circuit (4).

4. Système selon la revendication 3, l'élément mobile étant une membrane souple (51) ou un piston.

5. Système selon l'une des revendications précédentes, le moyen de pressurisation (5) étant agencé à l'extérieur du réservoir de stockage d'H₂.

6. Système selon l'une des revendications 1 à 4, le moyen de pressurisation (5) étant agencé à l'intérieur de l'enceinte (20) du réservoir de stockage d'H₂.

7. Système selon l'une des revendications précédentes, le deuxième circuit comportant une première pompe (60) et un autre échangeur de chaleur (41) constituant un premier échangeur secondaire.

8. Procédé de fonctionnement d'un système selon l'une des revendications précédentes, comprenant une étape de pressurisation permanente, pour amener la valeur de pression dans le deuxième circuit à une valeur proche de celle du premier circuit.

9. Procédé selon la revendication 8, l'étape de pressurisation étant réalisée automatiquement.

10. Procédé selon la revendication 8 ou 9, la pression dans le deuxième circuit étant supérieure à celle dans le premier circuit.

11. Procédé selon la revendication 10, la pression dans le premier circuit étant au moins égale à 350 bars, celle dans le deuxième circuit étant supérieure d'environ 2 à 3 bars.

12. Procédé selon l'une des revendications 8 à 11, selon lequel le fluide caloporteur circulant dans le deuxième circuit est un liquide, de préférence à base d'eau, notamment avec du glycol ou autre.

13. Procédé selon l'une des revendications 8 à 12, selon lequel le fluide secondaire circulant dans l'échangeur secondaire (41) du deuxième circuit est un liquide, de préférence de l'eau, ou un gaz, de préférence de l'air.

14. Ensemble d'alimentation électrique comprenant une pile à combustible (7) et un système (1) selon la revendication 7, le premier échangeur de chaleur secondaire (41) étant relié à la pile à combustible de sorte que la chaleur évacuée par la pile à combustible en fonctionnement permette la désorption de l'hydrogène dans le réservoir (2).

15. Installation stationnaire de rechargement d'hydrogène comprenant un ensemble selon la revendication 14, ainsi qu' une deuxième pompe (44) et un deuxième échangeur de chaleur secondaire (45), la deuxième pompe et le deuxième échangeur de chaleur secondaire étant reliés au deuxième circuit lors du rechargement en H₂ du réservoir (2).

## Patentansprüche

1. Reversibles Speichersystem (1) für Wasserstoff, mit:
- einem Speicherbehälter (2) für Wasserstoff, der eine Hülle (20) aufweist, die Metallhydride enthält, die in einen als erster Wärmetauscher bezeichneten Wärmetauscher (1) mit zwei Fluidkreisläufen integriert sind,
- einem als erster Kreislauf bezeichneten Wasserstoffkreislauf (3), der mit dem Inneren der Hülle verbunden ist, um Wasserstoff H₂, der durch die Metallhydride zu absorbieren oder zu desorbieren ist, zuzuführen bzw. zurückzugewinnen, wobei der Teil (30) des ersten Kreislaufes im Inneren der Hülle einen der Wärmetauscherkreisläufe bildet,
einem als zweiter Kreislauf bezeichneten Kreislauf für eine Wärmeträgerfluid (4), der mit dem Wärmetauscher verbunden ist, wobei der Teil (40) des zweiten Kreislaufs innerhalb des Wärmetauschers den anderen der Wärmetauscherkreisläufe bildet und die ersten und zweiten Kreisläufe gegeneinander abgedichtet sind,
- einem Druckausgleichsmittel (5), das dazu dient, den Druck in dem zweiten Kreislauf auf einen Wert zu bringen, der im wesentlichen gleich dem Druck in dem ersten Kreislauf ist, mit einer Differenz, die typischerweise 1 bar oder 2 bis 3 bar beträgt.

2. System nach Anspruch 1, bei dem das Druckausgleichsmittel aus dem Rohr oder den Rohren (400) des Wärmetauschers (21) besteht, wobei der Querschnitt des Rohres oder der Rohre des Wärmetauschers so angepasst ist, dass sie sich ausreichend verformen können, um den Wert des Druckes in dem zweiten Kreislauf auf einen Wert in der Nähe des Druckes in dem ersten Kreislaufs zu bringen.

3. System nach Anspruch 1, bei das Druckausgleichsmittel in einem Druckausgleicher besteht, das durch eine Hülle (50) gebildet wird, in deren Inneren ein bewegliches Element (51) befestigt ist, das eine erste Kammer (52) von einer zweiten Kammer (53) trennt und die Kammern gegeneinander abdichtet, wobei die erste Kammer (52) mit dem ersten Kreislauf (3) und die zweite Kammer (53) mit dem zweiten Kreislauf (4) verbunden ist.

4. System nach Anspruch 3, bei dem das bewegliche Element eine flexible Membran (51) oder ein Kolben ist.

5. System nach einem der vorstehenden Ansprüche, bei dem das Druckausgleichsmittel außerhalb des Speicherbehälters für H₂ angeordnet ist.

6. System nach einem der Ansprüche 1 bis 4, bei dem das Druckausgleichsmittel (5) innerhalb der Hülle (20) des Speicherbehälters für H₂ angeordnet ist.

7. System nach einem der vorstehenden Ansprüche, bei dem der zweite Kreislauf eine erste Pumpe (60) und einen weiteren Wärmetauscher (41) aufweist, der einen ersten sekundären Wärmetauscher bildet.

8. Verfahren zum Betrieb eines Systems nach einem der vorstehenden Ansprüche, mit einem Schritt des permanenten Druckausgleiches, um den Druck in dem zweiten Kreislauf auf einen Wert in der Nähe des Druckes in dem ersten Kreislauf zu bringen.

9. Verfahren nach Anspruch 8, bei dem der Schritt des Druckausgleiches automatisch ausgeführt wird.

10. Verfahren nach Anspruch 9 oder 10, bei dem der Druck in dem zweiten Kreislauf grösser ist als derjenige in dem ersten Kreislauf.

11. Verfahren nach Anspruch 10, bei dem der Druck in dem ersten Kreislauf wenigstens 350 bar beträgt und derjenige im zweiten Kreislauf um etwa 2 bis 3 bar größer ist.

12. Verfahren nach einem der Ansprüche 8 bis 11, bei dem das in dem zweiten Kreislauf zirkulierende Wärmeträgerfluid eine Flüssigkeit ist, vorzugsweise auf wässriger Basis, insbesondere mit Glykol oder dergleichen.

13. Verfahren nach einem der Ansprüche 8 bis 12, bei dem das sekundäre Fluid, das in dem sekundären Wärmetauscher (41) des zweiten Kreislaufs zirkuliert, eine Flüssigkeit ist, vorzugsweise Wasser, oder ein Gas, vorzugsweise Luft.

14. Elektrische Versorgungsquelle mit einer Brennstoffzelle (7) und einem System (1) nach Anspruch 7, bei welcher der erste sekundäre Wärmetauscher (41) so mit der Brennstoffzelle verbunden ist, dass die im Betrieb von der Brennstoffzelle abgegebene Wärme die Desorption des Wasserstoffs in dem Behälter (2) ermöglicht.

15. Stationäre Wasserstoffladestation mit einer Versorgungsquelle nach Anspruch 14 und einer zweiten Pumpe (44) und einem zweiten sekundären Wärmetauscher (45), wobei die zweite Pumpe und der zweite sekundäre Wärmetauscher beim Befüllen des Behälters (2) mit H₂ mit dem zweiten Kreislauf verbunden sind.

## Claims

1. A reversible hydrogen-storage system (1) comprising:
- a hydrogen storage tank (2) comprising a vessel (20) containing metal hydrides incorporated into a heat exchanger (21) with two fluid circuits, referred to as the primary exchanger,
- a hydrogen circulation circuit (3), referred to as the first circuit, connected into the inside of the vessel in order to supply or recover the hydrogen H₂ that is respectively to be absorbed or desorbed by the metal hydrides, the part (30) of the first circuit inside the vessel constituting one of the exchanger circuits,
- a heat-transfer fluid circulation circuit (4), referred to as the second circuit, connected to the exchanger, the part (40) of the second circuit in the exchanger constituting the other of the circuits of the exchanger, the first and second circuits being sealed with respect to one another,
- a pressurizing means (5) for bringing the pressure in the second circuit to a value close to that in the first circuit, with a difference typically of 1 bar or even 2 to 3 bar.

2. The system as claimed in claim 1, the pressurizing means consisting in the tube or tubes (400) of the heat exchanger (21), the cross section of the tube or tubes of the exchanger being designed so as to deform enough to bring the pressure in the second circuit to a value close to that in the first circuit.

3. The system as claimed in claim 1 or 2, the pressurizing means consisting in a pressure equalizer consisting of a vessel (50) inside which there is fixed a mobile element (51) dividing a first chamber (52) from a second chamber (53) in a sealed manner, the first chamber (52) being connected to the first circuit (3), the second chamber (53) being connected to the second circuit (4).

4. The system as claimed in claim 3, the mobile element being a flexible membrane (51) or a piston.

5. The system as claimed in one of the preceding claims, the pressurizing means (5) being arranged outside the H₂ storage tank.

6. The system as claimed in one of claims 1 to 4, the pressurizing means (5) being arranged inside the vessel (20) of the H₂ storage tank.

7. The system as claimed in one of the preceding claims, the second circuit comprising a first pump (60) and another heat exchanger (41) constituting a first secondary exchanger.

8. A method for operating a system as claimed in one of the preceding claims, comprising a permanent pressurization step for bringing the pressure in the second circuit to a value close to that in the first circuit.

9. The method as claimed in claim 8, the pressurization step being performed automatically.

10. The method as claimed in claim 8 or 9, the pressure in the second circuit being greater than that in the first circuit.

11. The method as claimed in claim 10, the pressure in the first circuit being at least equal to 350 bar, that in the second circuit being around 2 to 3 bar higher.

12. The method as claimed in any one claims 8 to 11, according to which the heat-transfer fluid is a liquid, preferably water-based, notably containing glycol or the like.

13. The method as claimed in any one claims 8 to 12, according to which the secondary fluid of the secondary exchanger (41) of the second circuit is a liquid, preferably water, or a gas, preferably air.

14. An electrical power supply unit comprising a fuel cell (7) and a system (1) as claimed in claim 7, the first secondary heat exchanger (41) being connected to the fuel cell in such a way that the heat given off by the fuel cell in operation allows the desorption of hydrogen in the tank (2).

15. A stationary installation for refilling hydrogen comprising a unit as claimed in claim 14, and a second pump (44) and a second secondary heat exchanger (45), the second pump and the second secondary heat exchanger being connected to the second circuit while the tank (2) is being refilled with H₂.
